# EUROPEAN PATENT APPLICATION

(11) **EP 2 420 475 A1**
(43) Date of publication of application: **22.02.2012**
(21) Application number: 11155139.6
(22) Date of filing: 21.02.2011
(51) Int. Cl.: C01G 23/04, H01M 10/0525, H01M 4/485, H01M 4/131, C01G 23/08

(54) **Negative electrode active material for rechargeable lithium battery, method of preparing same, and rechargeable lithium battery including same**

(30) Priority: 20.08.2010 KR 20100081005
(71) Applicant: Samsung SDI Co., Ltd., Gyeonggi-do 449-577 (KR)
(72) Inventor: Eom, Ji-Yong, Gyeonggi-do (KR)
(74) Representative: Gulde Hengelhaupt Ziebig & Schneider

(57) **Abstract**

The present invention relates to a negative electrode active material for a rechargeable lithium battery, a method of manufacturing the same, and a rechargeable lithium battery including the same. The negative active material has a specific surface area of 2 m²/g or more and less than 5 m²/g and includes secondary particles composed of assembled primary particles of a compound represented by Chemical Formula 1:
[Chemical Formula 1]
Li_{4-x-y}M_{y}Ti_{5+x-z}M'_{z}O₁₂
wherein, x is 0 to 1, y is 0 to 1 and 1, z is 0 to 1,
M is La, Tb, Gd, Ce, Pr, Nd, Sm, Ba, Sr, Ca, Mg, or a combination thereof,
and M' is V, Cr, Nb, Fe, Ni, Co, Mn, W, AI, Ga, Cu, Mo, P, or a combination thereof.

## Description

The present invention relates to a negative active material for a rechargeable lithium battery, a method of manufacturing the same, and a rechargeable lithium battery including the same.

### Description of Related Art

Lithium rechargeable batteries have recently drawn attention as a power source for small portable electronic devices. They use an organic electrolyte solution and thereby have twice the discharge voltage of a conventional battery using an alkali aqueous solution, and accordingly have high energy density.

For positive active materials of a rechargeable lithium battery, lithium-transition element composite oxides being capable of intercalating lithium, such as LiCo0₂, LiMn₂0₄, LiNi₁₋ₓCoₓO₂ (0<x<1), and so on, have been researched.

As for negative active materials of a rechargeable lithium battery, various carbon-based materials such as artificial graphite, natural graphite, and hard carbon, which can all intercalate and deintercalate lithium ions, have been used. Among the carbon-based materials, since graphite has a low discharge potential relative to lithium of -0.2V, a battery using graphite as a negative active material has a high discharge potential of 3.6V and high energy density. Furthermore, graphite provides a long cycle life for a battery due to its outstanding reversibility. However, a graphite active material has low density (theoretical density of 2.2 g/cc) and consequently low capacity in terms of energy density per unit volume when the graphite is used as a negative active material. Further, it has swelling or capacity reduction problems when a battery is misused or overcharged and the like, because graphite is likely to react with an organic electrolyte at a high discharge voltage.

In addition, there has been an attempt to use lithium titanate as a negative electrode material. Since lithium titanate has high-rate charging, a long cycle life, and a high degree of safety even though it has low energy density, it has drawn attention as a new negative electrode of a large rechargeable lithium battery.

In particular, Li₄Ti₅O₁₂ having a spinel structure is known to have a small crystal structure change and little degradation due to charge and discharge cycles when it repeatedly intercalates/deintercalates lithium and can be a useful negative active material. However, since it has low electrical conductivity (about 10⁻⁹S/cm), it has a problem of high reaction resistance during the intercalation/deintercalation of lithium and high characteristic deterioration during sharp charge/discharge at high C rates. Thus, it may not be applied to a battery requiring high power.

### SUMMARY

The present invention is directed toward a negative active material for a rechargeable lithium battery having high conductivity, a method of manufacturing the negative active material, and a rechargeable lithium battery including the negative active material.

According to the present invention, a negative active material for a rechargeable lithium battery is provided that includes secondary particles composed of assembled primary particles of a compound represented by the following Chemical Formula 1:

Li_{4-x-y}M_{y}Ti_{5+x-z}M'_{z}O₁₂ [Chemical Formula 1]

wherein, x is 0 to 1 (at 0 or 1 or between 0 and 1), y is 0 to 1 (at 0 or 1 or between 0 and 1), z is 0 to 1 (at 0 or 1 or between 0 and 1),
M is La, Tb, Gd, Ce, Pr, Nd, Sm, Ba, Sr, Ca, Mg, or a combination thereof, and M' is V, Cr, Nb, Fe, Ni, Co, Mn, W, Al, Ga, Cu, Mo, P, or a combination thereof.

In Chemical Formula 1, z may be 0.

The compound may be Li4 Tis012.

The negative active material has a specific surface area of 2 _{M}²/g or more and less than 5 m²/g.The negative active material may have a specific surface area of 2.5 to 4.5 M²/^{g} (at 2.5M²/g or 4.5 m²/g or between 2.5 m²/g and 4.₅ m²/g).

The primary particles may have an average size of 100 to 500 nm (at 100nm or 500nm or between 100nm and 500nm), and the secondary particles may have an average size of 5 to 20 µm (at 5µm or 20µm or between 5µm and 20µm).

The negative active material may further include 0.01 to 0.4 wt% (at 0.01 wt% or 0.3 wt% or between 0.01 wt% and 0.3 wt%) of carbonate based on the total weight of the negative active material.

According to another embodiment of the present invention, a method of manufacturing the negative active material is provided that includes: mixing a lithium source material and a titanium source material in a solvent to prepare a lithium-titanium liquid including fine particles of lithium-titanium composites; spray drying the lithium-titanium liquid to prepare macroparticles including assembled fine particles; and firing the macroparticles to obtain secondary particles including assembled primary particles represented by Chemical Formula 1.

The spray drying process may be performed at 250°C to 350°C.

The firing process may be performed at 800°C to 850°C.

During the mixing process, an M-containing material (M is La, Tb, Gd, Ce, Pr, Nd, Sm, Ba, Sr, Ca, Mg, or a combination thereof) and an M'-containing material (M' is V, Cr, Nb, Fe, Ni, Co, Mn, W, Al, Ga, Cu, Mo, P or a combination thereof) or a combination thereof may further be added.

According to another embodiment of the present invention, provided is a rechargeable lithium battery including a negative electrode including the negative active material, a positive electrode including a positive active material, and a non-aqueous electrolyte.

The negative active material according to one embodiment provides a rechargeable lithium battery having an excellent charging and discharging characteristics at high rates and improved swelling characteristic (i.e, low swelling phenomenon).

### BRIEF DESCRIPTION OF THE DRAWINGS

FIG. 1 is a schematic view showing a rechargeable lithium battery according to an embodiment.
FIG. 2 is a SEM photograph of the negative active material according to Example 1.
FIG. 3 is a graph showing swelling evaluation of the half-cells according to Examples 1 and 2 and Comparative Examples 1 and 2.

### DETAILED DESCRIPTION

The negative active material according to one embodiment includes secondary particles including assembled primary particles of a compound represented by the following Chemical Formula 1, and has a specific surface area from 2 _{M}²/g or more and less than 5 _{M}²_{/}g.

L1₄-ₓ-yMyT1₅+ₓ-_{z}M'_{z}O₁₂ [Chemical Formula 1]

In Chemical Formula 1, x is at 0 or 1 or between 0 and 1, y is at 0 or 1 or between 0 and 1, z is at 0 or 1 or between 0 and 1,
M is La, Tb, Gd, Ce, Pr, Nd, Sm, Ba, Sr, Ca, Mg, or a combination thereof; and M' is V, Cr, Nb, Fe, Ni, Co, Mn, W, Al, Ga, Cu, Mo, P, or a combination thereof.

In Chemical Formula 1, z may be 0.

The compound may be Li4 Tis012.

The negative active material may have a specific surface area from 2.5 m²/g to 4.5 m²/g. When the specific surface area of the negative active material falls in the above range, the reactivity with the electrolyte is so small that the effect of improving the high temperature swelling characteristic is excellent. Thus, when it is allowed to stand at a high temperature for a long time, the thickness expansion rate becomes small. Also, since the reactivity with the electrolyte is small, the initial charge and discharge efficiency may be increased.

In the negative active material according to one embodiment, the primary particles may have an average size from 100nm to 500nm. As described above, since the negative active material includes nano-sized primary particles, electrical conductivity is improved. Thus, the lithium charge and discharge rate is increased and the high rate characteristic is improved.

Secondary particles including the assembled primary particles may have an average size in a range from 5µm to 20µm. When the size of the secondary particles falls in the range, the specific surface area of an active material is controlled while not changing the charge and discharge characteristic, and thus swelling is suppressed.

The negative active material may include 0.01 wt% to 0.3 wt% of carbonate based on the total weight of the negative active material.

According to another embodiment of the present invention, a method of manufacturing a negative active material for a rechargeable lithium battery is provided. The manufacturing method includes mixing a lithium source material and a titanium source material in a solvent to prepare a lithium-titanium liquid including fine particles of lithium-titanium composites, spray drying the lithium-titanium liquid to prepare macroparticles including assembled fine particles, and firing the macroparticles.

Hereinafter, a method of manufacturing the negative active material is described in detail.

A lithium source material and titanium source material are mixed in a solvent to prepare a lithium-titanium liquid including fine particles of lithium-titanium composites.

The lithium source material includes lithium carbonate, lithium hydroxide, lithium nitrate, lithium acetate, or a mixture thereof.

The titanium source material includes titanium oxide, titanium chloride, titanium sulfate, or a mixture thereof.

Also, as for the solvent, water, ethanol, methanol, or a mixture thereof may be used. An M-containing material (M is La, Tb, Gd, Ce, Pr, Nd, Sm, Ba, Sr, Ca, Mg, or a combination thereof) or an M'-containing material (M' is V, Cr, Nb, Fe, Ni, Co, Mn, W, Al, Ga, or a combination thereof) may be further included along with the lithium source material and the titanium source material. Examples of the M-containing material include oxides, hydroxides, nitrides, sulfides, and a mixture thereof, and examples of the M'-containing material include oxides, hydroxides, nitrides, sulfides, or mixtures thereof.

The mixing ratio of the lithium source material, the titanium source material, and selectively the M-containing material and M'-containing material may be properly controlled in such a manner that the composition of the following Chemical Formula 1 is acquired.

Through the mixing process, lithium-titanium composite fine particles where the titanium source materials are positioned on the surface of the lithium source material are formed. As a result, a lithium-titanium liquid containing the lithium-titanium composite fine particles is prepared. In one embodiment, the average particle size of the fine particles is at 500nm or 2µm or between 500nm and 2pm.

Subsequently, the lithium-titanium liquid is sprayed and dried. Through the spray drying process, the lithium-titanium composite fine particles are assembled to form macroparticles. The average particle size of the macroparticles may be in a range from 20pm to 100µm. When the average particle size of the macroparticles falls in the above range, a negative active material having a desired size and specific surface area may be finally acquired.

The spray drying process may be performed at 250°C to 350°C.

Subsequently, the macroparticles are fired, and the fire product is pulverized.

During the firing process, chemical reactions occur between the lithium source material and the titanium source material, and selectively the M-containing material and the M'-containing material, which constitute a lithium-titanium composite, and a compound represented by the following Chemical Formula 1 is prepared. Also, the chemical reaction occurs between fine particles, and does not occur between macroparticles that are formed as the fine particles are assembled. In short, a chemical reaction occurs among fine particles so as to form primary particles of a compound represented by the following Chemical Formula 1, and as the primary particles are assembled, secondary particles are formed.

Li_{4-x-y}M_{y}Ti_{5+x-z}M'_{z}O₁₂ [Chemical Formula 1]

wherein, x is at 0 or 1 or between 0 and 1, y is at 0 or 1 or between 0 and 1, z is at 0 or 1 or between 0 and 1,
M is La, Tb, Gd, Ce, Pr, Nd, Sm, Ba, Sr, Ca, Mg, or a combination thereof; and M' is V, Cr, Nb, Fe, Ni, Co, Mn, W, Al, Ga, Cu, Mo, P, or a combination thereof.

In Chemical Formula 1, z may be 0.

The compound may be Li₄Ti₅Oₗ₂.

The firing process may be performed at 800°C to 850°C. Also, the firing process may be performed in an oxidation or reduction atmosphere, and the oxidation or reduction atmosphere may include air, oxygen, nitrogen, argon, or a combination thereof.

When the firing process is performed within the temperature range, a negative active material having more appropriate crystallinity may be prepared, and the charge and discharge characteristic may be improved.

Also, when the firing process is performed in a reduction atmosphere, the amount of the lithium source material remaining on the surface of the final negative active material may be decreased, compared with a case where it is performed in an oxidation atmosphere.

The pulverizing process may be performed to make the average size of the secondary particles at 5pm or 20pm or between 5µm and 20µm. Also, the average size of the primary particles after the pulverizing process may be at 100nm or 500nm or between 100nm and 500nm.

Another embodiment provides a rechargeable lithium battery.

Rechargeable lithium batteries may be classified as lithium ion batteries, lithium ion polymer batteries, and lithium polymer batteries according to the presence of a separator and the kind of electrolyte used in the battery. The rechargeable lithium batteries may have a variety of shapes and sizes, and include cylindrical, prismatic, or coin-type batteries, and may be thin film batteries or may be rather bulky in size. Structures and fabricating methods for rechargeable lithium batteries are well known in the art.

The rechargeable lithium battery includes a negative electrode including a negative active material according to one embodiment, a positive electrode including a positive active material, and a non-aqueous electrolyte.

The negative electrode includes a current collector and a negative active material layer formed on the current collector. The negative active material layer includes a negative active material according to one embodiment.

The negative active material layer may include at 95 wt% or 99 wt% or between 95 wt% and 99 wt% of the negative active material based on the total weight of the negative active material layer.

The negative active material layer also includes a binder and optionally a conductive material. The negative active material layer may include at 1 wt% or 5 wt% or between 1 wt% and 5 wt% of a binder based on the total weight of the negative active material layer. In one embodiment, when the negative active material layer further includes a conductive material, 90 wt% to 98 wt% of the negative active material, 1 wt% to 5 wt% of the binder, and 1 wt% to 5 wt% of the conductive material are included.

The binder improves binding properties of the negative active material particles to one another and to a current collector. The binder includes a non-water-soluble binder, a water-soluble binder, or a combination thereof.

The non-water-soluble binder includes polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof. The water-soluble binder includes a styrene-butadiene rubber, an acrylated styrene-butadiene rubber, polyvinyl alcohol, sodium polyacrylate, a copolymer including propylene and a C2 to C8 olefin, a copolymer of (meth)acrylic acid and (meth)acrylic acid alkyl ester, or a combination thereof.

When the water-soluble binder is used as a negative electrode binder, a cellulose-based compound may be further used to provide viscosity. As for the cellulose-based compound, at least one kind of carboxylmethyl cellulose, hydroxypropylmethyl cellulose, methyl cellulose, and alkali metal salts thereof may be mixed and used. The alkaline metal may be Na, K, or Li. The cellulose-based compound may be included in an amount of 0.1 to 3 parts by weight based on 100 parts by weight of the binder.

The conductive material is included to improve electrode conductivity. Any electrically conductive material may be used as a conductive material unless it causes a chemical change. Examples of the conductive material include: a carbon-based material such as natural graphite, artificial graphite, carbon black, acetylene black, ketjen black, carbon fiber, and the like; a metal-based material including a metal powder or a metal fiber including copper, nickel, aluminum, silver, or the like; a conductive polymer such as polyphenylene derivative, or the like; or mixtures thereof.

The current collector includes a material selected from a copper foil, a nickel foil, a stainless steel foil, a titanium foil, a nickel foam, a copper foam, a polymer substrate coated with a conductive metal, or combinations thereof.

The positive electrode includes a current collector and a positive active material layer disposed on the current collector. The positive active material may include lithiated intercalation compounds that reversibly intercalate and deintercalate lithium ions. Examples of the positive active material include a composite oxide including at least one selected from the group consisting of cobalt, manganese, and nickel, as well as lithium. In one embodiment, the following lithium-containing compounds may be used. LiₐA_{1-b}X_{b}D₂ (0.90 < a < 1.8, 0 ≤ b ≤ 0.5); LiₐEi-_{b}X_{b}0₂-_{c}D_{c} (0.90 < a < 1.8, 0 ≤ b ≤ 0.5, 0 < c < 0.05); LiₐE_{2-b}X_{b}O_{4-c}D_{c} (0.90 < a < 1 .8, 0 < b ≤ 0.5, 0 ≤ c ≤ 0.05); LiₐNi_{1-b-c}Co_{b}X_{c}D_{α} (0.90 ≤ a ≤ 1.8, 0 ≤ b ≤ 0.5, 0 ≤ c ≤ 0.05, 0 ≤ a ≤ 2); LiₐNi_{1-b-c}Co_{b}X_{c}O_{2-α} T _{α} ≤ (0.90 ≤ a ≤ 1.8, 0 ≤ b ≤ 0.5, 0 c < 0.05, 0 ≤ a < 2); LiₐNi_{1-b-c}Co_{b}X_{c}O_{2-α} T₂ (0.90 ≤ a ≤ 1.8, 0 ≤ b ≤ 0.5, o < c < 0.05,0 < a < 2); LiₐNi_{1-b-c}Mn_{b}X_{c}D_{α} (0.90 ≤ a ≤ 1.8, 0 ≤ b ≤ 0.5, 0 ≤ c ≤0.05,0≤ a ≤ 2); LiₐNi_{1-b-c}Mn_{b}X_{c}O_{2-α} T _{α} (0.90 ≤ a ≤ 1.8,0 ≤ b ≤ 0.5,0 ≤ c ≤ 0.05, 0 < a < 2); LiₐNi_{1-b-c}Mn_{b}X_{c}O_{2-α} T₂ (0.90 ≤ a ≤ 1.8, 0 ≤ b ≤ 0.5, 0 ≤ c ≤ 0.05,0 ≤ α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂(0.90 a ≤ 1.8, 0 ≤ b ≤ 0.9, 0 c ≤ 0.5, 0 < d ≤ 0.5, 0.001 ≤ e ≤ 0.1); LiₐNiG_{b}O₂ (0.90 ≤ a ≤ 1.8, 0.001 ≤ b ≤ 0.1); LiₐCoG_{b}O₂ (0.90 < a < 1.8, 0.001 < b < 0.1); LiₐMnG_{b}O₂ (0.90 ≤ a ≤ 1.8, 0.001 ≤ b ≤ 0.1); LIₐMn₂G_{b}0₄ (0.90 < a < 1.8, 0.001 < b < 0.1); QO₂; QS₂; LiQS₂; V₂0₅; LiV₂O₅; LiZ0₂; LiNiVO₄; Li(_{3-f})J₂(PO₄)₃(0 ≤ f ≤ 2); Li_{(3-f)}Fe₂(PO₄)₃(0 ≤ f ≤ 2); LiₐFePO₄ (0.90 < a < 1.8).

In the above Chemical Formulas, A is selected from the group consisting of Ni, Co, Mn, and combinations thereof; X is selected from the group consisting of Al, Ni, Co, Mn, Cr, Fe, Mg, Sr, V, a rare earth element, and combinations thereof; D is selected from the group consisting of O, F, S, P, and combinations thereof; E is selected from the group consisting of Co, Mn, and combinations thereof; T is selected from the group consisting of F, S, P, and combinations thereof; G is selected from the group consisting of Al, Cr, Mn, Fe, Mg, La, Ce, Sr, V, and combinations thereof; Q is selected from the group consisting of Ti, Mo, Mn, and combinations thereof; Z is selected from the group consisting of Cr, V, Fe, Sc, Y, and combinations thereof; and J is selected from the group consisting of V, Cr, Mn, Co, Ni, Cu, and combinations thereof.

The compound may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for a coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be formed in a method having no adverse influence on properties of a positive active material by including these elements in the compound. For example, the method may include any suitable coating method such as spray coating, dipping, and the like.

In the positive active material layer, the positive active material may be included in an amount at 90 wt% or 98 wt% or between 90 wt% and 98 wt% based on the total weight of the positive active material layer.

The positive active material layer may also include a binder and a conductive material. The binder and conductive material may each be included in an amount at 1 wt% or 5 wt% or between 1 wt% and 5 wt%, based on the total weight of the positive active material layer.

The binder improves binding properties of the positive active material particles to each other and to a current collector. Examples of the binder include at least one selected from the group consisting of polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidenefluoride, polyethylene, polypropylene, a styrene-butadiene rubber, an acrylated styrene-butadiene rubber, an epoxy resin, nylon, and the like, but is not limited thereto.

The conductive material improves electrical conductivity of a negative electrode. Any electrically conductive material may be used as a conductive agent unless it causes a chemical change. Examples of the conductive material include: a carbon-based material such as natural graphite, artificial graphite, carbon black, acetylene black, ketjen black, a carbon fiber, or the like; a metal-based material of a metal powder or metal fiber of copper, nickel, aluminum, silver, or the like; a conductive polymer such as a polyphenylene derivative; or mixtures thereof.

The current collector may include an Al foil, but is not limited thereto.

The negative electrode and positive electrode may be fabricated by a method including mixing the active material, and a binder and optionally a conductive material to provide an active material composition, and coating the composition on a current collector. The electrode manufacturing method can be any suitable electrode manufacturing method. The solvent includes N-methylpyrrolidone and the like, but is not limited thereto.

The non-aqueous electrolyte includes a non-aqueous organic solvent and a lithium salt.

The non-aqueous organic solvent serves as a medium for transmitting ions taking part in the electrochemical reaction of the battery.

The non-aqueous organic solvent may include a carbonate-based, ester-based, ether-based, ketone-based, alcohol-based, or aprotic solvent. Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like. Examples of the ester-based solvent may include methyl acetate, ethyl acetate, n-propyl acetate, dimethyl acetate, methylpropionate, ethylpropionate, y-butyrolactone, decanolide, valerolactone, mevalonolactone, caprolactone, or the like. Examples of the ether-based solvent include dibutyl ether, tetraglyme, diglyme, dimethoxyethane, 2-methyltetrahydrofuran, tetrahydrofuran, or the like; and examples of the ketone-based solvent include cyclohexanone, or the like. Examples of the alcohol-based solvent include ethyl alcohol, isopropyl alcohol, or the like; and examples of the aprotic solvent include nitriles such as R-CN (where R is a C2 to C20 linear, branched, or cyclic hydrocarbon, a double bond, an aromatic ring, or an ether bond), amides such as dimethylformamide, dioxolanes such as 1,3-dioxolane, sulfolanes, or the like.

The non-aqueous organic solvent may be used singularly or in a mixture. When the organic solvent is used in a mixture, the mixture ratio may be controlled in accordance with a desirable battery performance.

The carbonate-based solvent may include a mixture of a cyclic carbonate and a linear carbonate. The cyclic carbonate and the chain carbonate are mixed together in a volume ratio at 1:1 or 1:9 or between 1:1 and 1:9. When the mixture is used as an electrolyte, the electrolyte performance may be enhanced.

In addition, the non-aqueous organic electrolyte may further include mixtures of carbonate-based solvents and aromatic hydrocarbon-based solvents. The carbonate-based solvents and the aromatic hydrocarbon-based solvents may be mixed together in a volume ratio at 1:1 or 30:1 or between 1:1 and 30:1.

The aromatic hydrocarbon-based organic solvent may be represented by the following Chemical Formula 2.

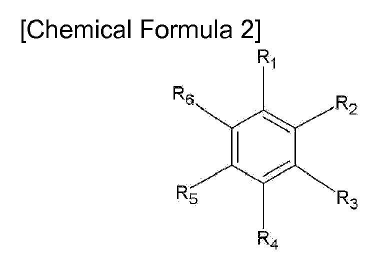

In the above Chemical Formula 2, R₁ to R₆ are independently hydrogen, a halogen, a C1 to C10 alkyl, a C1 to C10 haloalkyl, or a combination thereof.

The aromatic hydrocarbon-based organic solvent may include, but is not limited to, at least one selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and combinations thereof.

The non-aqueous electrolyte may further include vinylene carbonate or an ethylene carbonate-based compound of the following Chemical Formula 3 as an additive for improving cycle life.

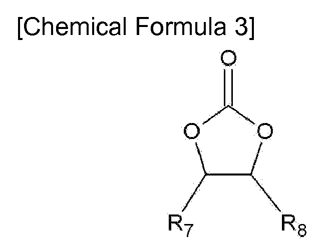

In the above Chemical Formula 3, R₇ and R₈ are independently hydrogen, a halogen, a cyano (CN), a nitro (NO₂), and a C1 to C5 fluoroalkyl, provided that at least one of R₇ and R₈ is a halogen, a cyano (CN), a nitro (N0₂), or a C1 to C5 fluoroalkyl, and R₇ and R₈ are not simultaneously hydrogen.

Examples of the ethylene carbonate-based compound include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or the like. The use amount of the additive for improving cycle life may be adjusted within an appropriate range.

The lithium salt supplies lithium ions in the battery, operates a basic operation of a rechargeable lithium battery, and improves lithium ion transportation between positive and negative electrodes. Non-limiting examples of the lithium salt include at least one supporting salt selected from LiPF₆, LiBF₄, LiSbF₆, LiAsF₆, LiN(SO₂C₂F₅)₂, Li(CF₃S0₂)₂N, LiN (S0₃C₂F₅)₂, LiC₄F₉S0₃, LiCl0₄, LiAlO₂, LiAlCl₄, LiN(CₓF₂ₓ₊i S0₂)(CyF₂y₊ᵢS0₂) (where x and y are natural numbers), LiCl, Lil, and LiB(C₂0₄)₂ (lithium bis(oxalato) borate: LiBOB). The lithium salt may be used in a concentration at 0.1M or 2.OM or between 0.1 M and 2.0M. In one embodiment, when the lithium salt is included at the above concentration range, electrolyte performance and lithium ion mobility is enhanced due to desired electrolyte conductivity and viscosity.

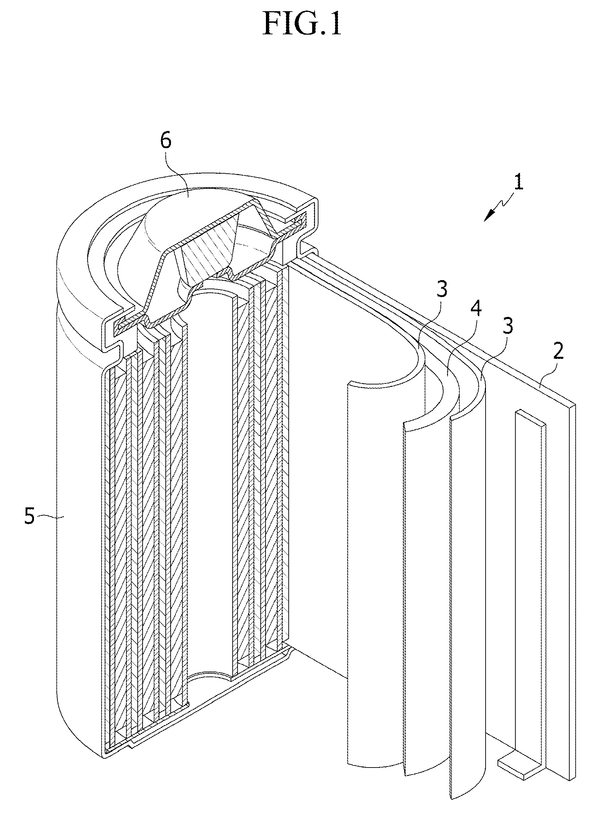

FIG. 1 is a schematic view of a representative structure of a rechargeable lithium battery according to one embodiment. As shown in FIG. 1, the rechargeable lithium battery 1 includes a battery case 5 including a positive electrode 4, a negative electrode 2, and a separator 3 interposed between the positive electrode 4 and the negative electrode 2, an electrolyte impregnated therein, and a sealing member 6 sealing the battery case 5.

The rechargeable lithium battery may not include the separator between the negative electrode and the positive electrode, as appropriate. Non-limiting examples of suitable separator materials include polyethylene, polypropylene, polyvinylidene fluoride, or multi-layers thereof, such as a
polyethylene/polypropylene double-layered separator, a
polyethylene/polypropylene/polyethylene triple-layered separator, or a polypropylene/polyethylene/polypropylene triple-layered separator.

The following examples illustrate this disclosure in more detail.

### (Example 1)

A slurry including lithium-titanium composite fine particles was prepared by mixing and agitating Li₂C0₃ and Ti0₂ in water in a mole ratio of about 4:5 using a bead mill. Herein, the average particle size of the lithium-titanium composite fine particles was about 1 pm.

Lithium-titanium composite macroparticles were prepared by spraying and drying the slurry at about 300°C. The average particle size of the acquired lithium-titanium composite macroparticles was about 50pm.

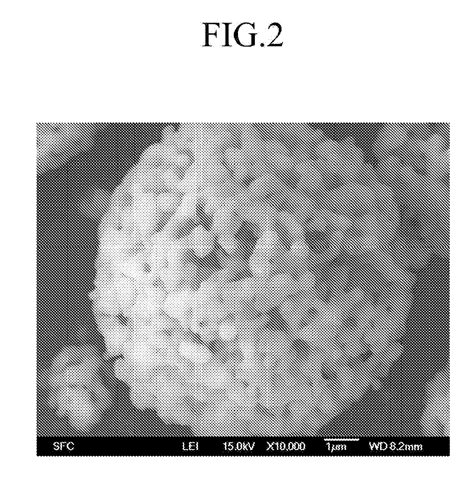

The macroparticles were fired in a firing furnace at a temperature of about 850°C in an air atmosphere for about 5 hours, and pulverized so that the primary particles of the firing product have an average particle size of about 250nm (existing in between 100nm and 500nm) and the secondary particles have an average size of about 20pm. As a result, as shown in the SEM photograph of FIG. 2, a negative active material including the secondary particles that were obtained by assembling the primary particles represented by Li₄Ti₅Oₗ₂ was prepared. The negative active material had a specific surface area of about 2.1m²/g. The negative active material included about 0.05 wt% of carbonate based on the total weight of the negative active material.

A negative active material slurry was prepared by mixing about 90 wt% of the negative active material, about 5 wt% of a carbon black conductive material, and about 5 wt% of a polyvinylidene fluoride binder in an N-methylpyrrolidone solvent. A current collector of Cu foil was coated with the negative active material slurry and pressed to provide a negative electrode.

Using the negative electrode and a counter electrode of lithium metal, an electrolyte, and a separator, a lithium half-cell was fabricated. The electrolyte was prepared by dissolving 1.0 mol/L of LiPF₆ in a mixed solvent of ethylene carbonate and ethylmethyl carbonate (3:7 volume ratio). The separator was a 20pm-thick polyethylene porous film.

### (Example 2)

A negative active material was prepared by pulverizing the secondary particles obtained by assembling the primary particles represented by Li₄Ti₅Oₗ₂ and prepared according to Example 1 with a particle pulverizer so that the average size of the secondary particles became about 10µm.

The negative active material had a specific surface area of about 3.0 m²/g. The primary particles had an average particle size of about 250nm (being between 100nm and 500nm). The negative active material included 0.1 wt% of carbonate based on the total weight of the negative active material.

Using the negative active material, a half-cell was fabricated in accordance with the same procedure as in Example 1.

### (Comparative Example 1)

A negative active material was prepared by pulverizing the secondary particles obtained by assembling the primary particles represented by Li₄Ti₅Oₗ₂ and prepared according to Example 1 with a particle pulverizer so that the average size of the secondary particles became about 5pm. The negative active material had a specific surface area of about 5.0 m²/g. The primary particles had an average particle size of 250nm (being between 100nm and 500nm). The negative active material included about 0.3 wt% of carbonate based on the total weight of the negative active material.

Using the negative active material, a half-cell was fabricated in accordance with the same procedure as in Example 1.

### (Comparative Example 2)

A negative active material was prepared by pulverizing the secondary particles obtained by assembling the primary particles represented by Li₄Ti₅Oₗ₂ and prepared according to Example 1 with a particle pulverizer so that the average size of the secondary particles became about 2pm. The negative active material had a specific surface area of about 6.5 m²/g. The primary particles had an average particle size of 250nm (being in the range at or between 100nm and 500nm). The negative active material included about 0.5 wt% of carbonate based on the total weight of the negative active material.

Using the negative active material, a half-cell was fabricated in accordance with the same procedure as in Example 1.

### Charge and Discharge Characteristics

Half-cells manufactured according to Examples 1 to 2 and Comparative Examples 1 to 2 were charged and discharged once at each charge and discharge rate by varying the charge and discharge rate to 0.1C, 0.2C, 0.5C, 1C, 2C, 5C, 10C, and 20C. The discharge capacity and charge and discharge efficiency (charge capacity/discharge capacity) are shown in the following Table 1.

**Table 1**

| | Example 1 | | Example 2 | | Comparative Example 1 | | Comparative Example 2 | |
|---|---|---|---|---|---|---|---|---|
| Charge and discharge rate | Discharge capacity (mAh/g) | Charge and discharge efficiency (%) | Discharge capacity (mAh/g) | Charge and discharge efficiency (%) | Discharge capacity (mAh/g) | Charge and discharge efficiency (%) | Discharge capacity (mAh/g) | Charge and discharge efficiency (%) |
| 0.1C | 168.01 | 97.62 | 168.53 | 97.65 | 167.06 | 96.45 | 165.24 | 94.99 |
| 0.2C | 167.38 | 99.02 | 168.30 | 99.27 | 166.28 | 98.74 | 164.67 | 98.40 |
| 0.5C | 166.51 | 99.15 | 167.90 | 99.38 | 165.42 | 98.91 | 163.97 | 98.63 |
| 1C | 165.08 | 98.33 | 167.41 | 99.17 | 164.14 | 98.22 | 162.36 | 97.90 |
| 2C | 136.60 | 98.02 | 166.63 | 98.85 | 162.87 | 97.67 | 160.48 | 97.10 |
| 5C | 161.67 | 97.03 | 165.15 | 98.09 | 160.42 | 96.37 | 157.06 | 95.36 |
| 10C | 159.27 | 96.07 | 163.00 | 96.93 | 158.11 | 95.11 | 152.40 | 92.85 |
| 20C | 147.26 | 87.05 | 152.76 | 89.34 | 140.11 | 84.37 | 123.99 | 75.71 |

As shown in Table 1, batteries of Examples 1 and 2 had a much better discharge capacity and charge and discharge efficiency during a high rate charge than those of Comparative Examples 1 and 2.

### Assessment of swelling characteristic

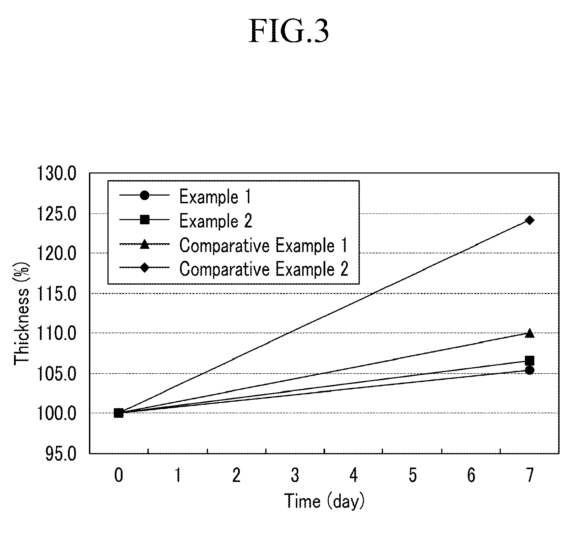

Half-cells manufactured according to Examples 1 to 2 and Comparative Examples 1 to 2 were allowed to stand at about 60°C for 7 days, and then their thickness expansion rate was measured. The measurement results were shown in FIG. 3. As shown in FIG. 3, in case of Examples 1 and 2 using a negative active material having a specific surface area of about 2.1 m²/g and about 3.0 m²/g, the thickness expansion rates were just about 105.0% although they were allowed to stand at a high temperature of about 60°C for 7 days. However, in the case of Comparative Examples 1 and 2 using a negative active material having a specific surface area of about 5.0 m²/g and about 6.5 m²/g, the thickness expansion rates were as high as about 120% and about 124%.

## Claims

1. A negative active material for a rechargeable lithium battery, the negative active material having a specific surface area of 2 m²/g or more and less than 5 m²/g and comprising
secondary particles being composed of assembled primary particles of a compound represented by the following Chemical Formula 1:
L1₄-ₓ-yMyT1₅+ₓ-_{z}M'_{z}O₁₂ [Chemical Formula 1]
wherein,xisOto1,yisOto1,zisOto1,
M is La, Tb, Gd, Ce, Pr, Nd, Sm, Ba, Sr, Ca, Mg, or a combination thereof, and M' is V, Cr, Nb, Fe, Ni, Co, Mn, W, Al, Ga, Cu, Mo, P, or a combination thereof.

2. The negative active material of claim 1, wherein the negative active material has a specific surface area of 2.5 to 4.5 m²/g.

3. The negative active material of claim 1 or 2, wherein the primary particles have an average size in the range of 100 to 500 nm.

4. The negative active material of any of the preceding claims, wherein the secondary particles have an average size of 5 to 20 pm.

5. The negative active material of any of the preceding claims, wherein the negative active material further comprises 0.01 wt% to 0.3 wt% of carbonate based on the total weight of the negative active material.

6. The negative active material of any of the preceding claims, wherein z is 0.

7. The negative active material of claim 6, wherein the compound is Li₄Ti₅O₁₂.

8. A method of manufacturing a negative active material, the method comprising:
mixing a lithium source material and a titanium source material in a solvent to prepare a lithium-titanium liquid comprising fine particles of lithium-titanium composites;
spray drying the lithium-titanium liquid to prepare macroparticles comprising assembled fine particles; and
firing the macroparticles.

9. The method of claim 8, wherein the spray drying process is performed at 250°C to 350°C.

10. The method of claims 8 or 9, wherein the firing process is performed at 800°C to 850°C.

11. The method of any one of claims 8 through 10, wherein during the mixing process, the method further comprises adding an M-containing material, where M is La, Tb, Gd, Ce, Pr, Nd, Sm, Ba, Sr, Ca, Mg, or a combination thereof; and/or adding an M'-containing material, where M' is V, Cr, Nb, Fe, Ni, Co, Mn, W, Al, Ga, Cu, Mo, P or a combination thereof.

12. A rechargeable lithium battery comprising:
a negative electrode comprising a negative active material according to any one of claims 1 through 7;
a positive electrode comprising a positive active material; and
a non-aqueous electrolyte.

13. Use of a negative active material according to any one of claims 1 through 7 in a rechargeable lithium battery.
